# EUROPEAN PATENT APPLICATION

(11) **EP 1 830 251 A2**
(43) Date of publication of application: **05.09.2007**
(21) Application number: 07004041.5
(22) Date of filing: 27.02.2007
(51) Int. Cl.: G06F 3/14

(54) **Apparatus and method for adjusting image**

(30) Priority: 01.03.2006 JP 2006054361
(71) Applicant: Pioneer Corporation, Tokyo 153-8654 (JP)
(72) Inventor: Yoshida, Hiroyuki c/o Pioneer Corporation, Ohta-ku Tokyo 143-8564 (JP)
(74) Representative: Grünecker, Kinkeldey, Stockmair & Schwanhäusser Anwaltssozietät

(57) **Abstract**

An apparatus and method for adjusting an image are provided, which enable to adjust an image quality easily so as to attain a desired image for a user when the image quality of the image displayed on a television and so on is to be adjusted. An adjustment image suited to an image quality to be adjusted is stored in a memory in advance, and upon the adjustment, a plurality of adjustment display images having different image quality parameter values from each other are formed with regard to the adjustment image and displayed on a monitor, and one image having a desired image quality is selected from a plurality of the adjustment display images in an operating section, so that an image quality parameter value to be adjusted in an image quality adjusting section is determined.

## Description

### BACKGROUND OF THE INVENTION

### (1) Field of the Invention

The present invention relates to an apparatus and method for adjusting an image by an image quality parameters such as a color (i.e. hue) or gamma value of an image.

### (2) Description of the Related Art

So far, in order to adjust an image quality of an image displayed on a television, a knob or button for adjusting the image quality attached to a television set has been operated or, alternatively, an image quality parameters such as a color (i.e. hue) to be adjusted has been displayed on a screen by remote control so as to adjust the image quality. However, with such an adjusting method, the whole displayed image is changed by the adjustment, therefore it has been difficult to recognize how much the image quality is adjusted. In order to solve such a problem, an adjusting method disclosed in Japanese Patent Application Laid-Open No. 2001-268475 has been proposed. In the adjusting method disclosed in Japanese Patent Application Laid-Open No. 2001-268475, for example, a screen is divided into two parts, wherein one part is used for displaying an image before an adjustment and another part is used for displaying an image after the adjustment, so that it becomes easy to recognize how much an image quality is adjusted.

However, with the adjusting method described in Japanese Patent Application Laid-Open No. 2001-268475, although it can be recognized how much an image quality is adjusted, since it is necessary to understand the contents of each image quality parameter to some extent to carry out the adjustment, therefore it is difficult for an ordinary user, who does not have a knowledge of image quality parameters, to recognize which image quality parameter should be adjusted how much in order to attain a desired image.

### SUMMARY OF THE INVENTION

It is therefore an objective of the present invention to solve the above problem and to provide an apparatus and method for adjusting an image, which enable to adjust an image quality easily so as to attain a desired image for a user without being conscious of a characteristic of adjusting parameters of an image.

In order to attain the above objective, the present invention is to provide an image adjusting apparatus including:
an adjusting device for adjusting at least one kind of image quality parameter with regard to an inputted image;
a displaying device for displaying a plurality of adjustment display images having different image quality parameter values from each other with regard to an adjustment image that is an image for adjusting the image quality parameter;
a taking-in device for taking in one adjustment display image selected from a plurality of the adjustment display images displayed by the displaying device; and
a controlling device for causing the adjusting device to adjust the inputted image on the basis of an image quality parameter value of said one adjustment display image taken in by the taking-in device.

The present invention is also to provide an image adjusting method for adjusting at least one kind of image quality parameter with regard to an inputted image, including the steps of:
displaying a plurality of adjustment display images having different image quality parameter values from each other with regard to an adjustment image that is an image for adjusting the image quality parameter;
taking in one adjustment display image selected from a plurality of the displayed adjustment display images; and
adjusting the inputted image on the basis of an image quality parameter value of said one adjustment display image.

### BRIEF DESCRIPTION OF THE DRAWINGS

Figure 1 is a block diagram of an image adjusting apparatus according to a preferred embodiment of the present invention;
Figure 2 is a flow chart illustrating an image quality parameter adjusting action of the image adjusting apparatus shown in Fig. 1;
Figure 3 is an illustration of an example of an adjustment image;
Figures 4A and 4B are illustrations of a display form of an adjustment display image;
Figure 5 is an illustration of a menu displayed on a monitor upon selecting and adjusting;
Figure 6 is an illustration of contents displayed on a monitor upon ordinary adjusting;
Figures 7A, 7B and 7C are illustrations of another display form of an adjustment display image; and
Figure 8 is an illustration of a further display form of an adjustment display image.

### DESCRIPTION OF THE PREFERRED EMBODIMENTS

In the following, an image adjusting apparatus according to a preferred embodiment of the present invention will be explained. As for an image adjusting apparatus according to a preferred embodiment of the present invention, when an image quality is to be adjusted, first, the displaying device displays a plurality of adjustment display images having different image quality parameter values with regard to an adjustment image that is an image for adjusting the image quality parameter and thereafter, the controlling device causes the adjusting device to adjust the inputted image on the basis of an image quality parameter value of one adjustment display image selected. Thereby, a user can easily select one image having a desired image quality from a plurality of images having different image quality parameter values. Therefore, the user can intuitively adjust the image quality without directly handling the image quality parameter value and without understanding the meaning and characteristic of the image quality parameter.

The adjustment image for adjusting the image quality parameter may be inputted from an adjustment image inputting device, and an adjustment display image forming device may form a plurality of the adjustment display images from the adjustment image so that the adjusting device displays a plurality of the adjustment display images. Thereby, the adjustment of the image quality can be carried out without inputting a plurality of the adjustment display images in advance.

An adjustment display image inputting device may input a plurality of the adjustment display images, so that the adjusting device displays the adjustment display images. Thereby, it is not necessary to form the adjustment display images, so that a size of a relevant circuit can be small.

If there are a plurality of the image quality parameters to be adjusted, a storing device may store the adjustment image for every image quality parameter. Thereby, even when a plurality of the image quality parameters are to be adjusted, the adjustment can be carried out with images that are suitable to each image quality parameter, therefore preciseness of the adjustment can be improved.

The storing device may store a plurality of the adjustment images with regard to one image quality parameter, and one image quality parameter may be adjusted by adjusting a plurality of the adjustment images. Thereby, an adjustment suitable to a characteristic of the image quality parameter can be carried out compared to an adjustment with one adjustment image.

In an image adjusting method according to a preferred embodiment of the present invention, when an image quality is to be adjusted, first, a plurality of adjustment display images having different image quality parameter values of an adjustment image that is an image for adjusting the image quality parameter are displayed, and one adjustment display image is selected from a plurality of the displayed adjustment display images so as to determine an adjusting value of the image quality parameter. Thereby, a user can easily select one image having a desired image quality from a plurality of images having different image quality parameter values. Therefore, the user can intuitively adjust the image quality without directly handling the image quality parameter value and without understanding the meaning and characteristic of the image quality parameter.

### [EXAMPLE 1]

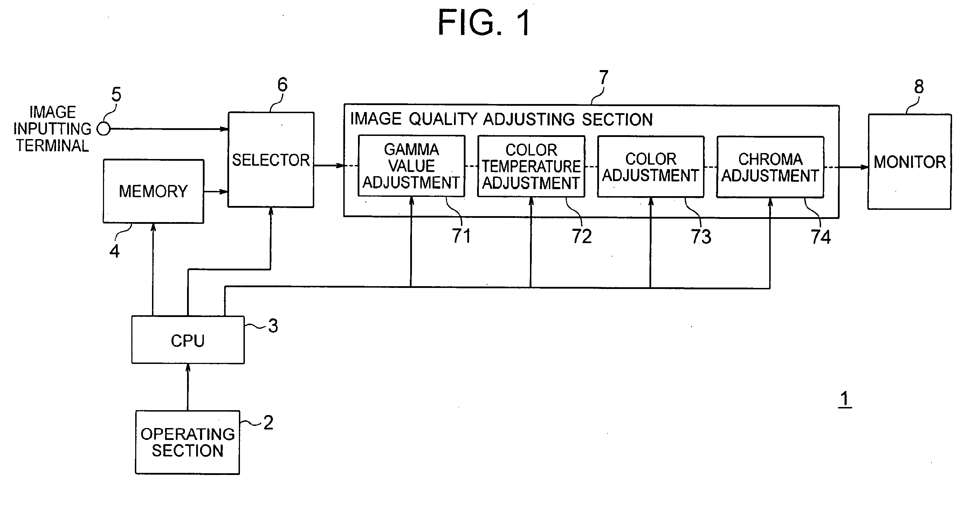

In the following, an image adjusting apparatus 1 according to the first preferred embodiment of the present invention will be explained with reference to Figs. 1 - 6. As shown in Fig. 1, the image adjusting apparatus 1 includes an operating section 2, CPU 3, memory 4, image inputting terminal 5, selector 6, image quality adjusting section 7, and monitor 8.

The operating section 2 as the taking-in device is an inputting device for a user to adjust an image that is outputted from the image adjusting apparatus 1, and includes a cursor key and decision key which are used upon the adjustment. The operating section 2 may be a type that can operate the image adjusting apparatus 1 by remote control.

The CPU 3 as the controlling device includes a ROM (Read Only Memory) and RAM (Random Access Memory), and receives an instruction from the operating section 2 so as to control the whole image adjusting apparatus 1 with a control program stored in the ROM.

The memory 4 as the adjustment image inputting device is a nonvolatile memory element, and stores in advance images suitable for adjusting respective image quality parameters for every image quality parameter.

The selector 6 switches: adjustment images for adjusting respective image quality parameters outputted from the memory 4; and inputted images from, for example, television tuner, video deck and DVD (Digital Versatile Disk) player, which are inputted from the image inputting terminal 5, through control by the CPU 3.

The image quality adjusting section 7, as the adjusting device or the adjustment display image forming device, adjusts each image quality parameter with regard to the inputted image and outputs it to the monitor 8. The image quality adjusting section 7 includes a gamma value adjustment 71, color temperature adjustment 72, color adjustment 73 and chroma adjustment 74. The gamma value adjustment 71, color temperature adjustment 72, color adjustment 73 and chroma adjustment 74 adjust the respective image quality parameters with regard to the images inputted to the image quality adjusting section 7, and form the respective adjustment display images by a command from the CPU 3. The image quality parameters are parameters such as a gamma value, color temperature, color (i.e. hue) and chroma, which can change an image quality such as a color or brightness of the image.

The gamma value adjustment 71 adjusts a gamma value as the image quality parameter with regard to the inputted image. The gamma value is a parameter indicating a ratio of a change in brightness between the inputted signal level and a displayed image. A characteristic indicating a relation between an inputted signal and a color of the image to be outputted is called a gamma characteristic. By adjusting the gamma value, the brightness from its intermediate gradation to brighter gradation can be displayed in detail or, to the contrary, the gamma characteristic can be altered so as to display dark gradation in detail.

The color temperature adjustment 72 adjusts a color temperature as the image quality parameter with regard to the inputted image. The color temperature is a parameter expressed by an absolute temperature unit indicating up to how high temperature a block body must be heated to radiate a light having such a relevant color. When the color temperature is high, the image looks blue due to short wavelength light. When the color temperature is low, the image looks red due to long wavelength light. That is, by adjusting the color temperature, the whole image can be adjusted to look blue or to look red.

The color adjustment 73 adjusts color (i.e. hue) as the image quality parameter with regard to the inputted image. The color is a parameter indicating a hue such as red, blue or green. By adjusting the color, a hue of the image can be adjusted.

The chroma adjustment 74 adjusts a chroma as the image quality parameter with regard to the inputted image. The chroma is a parameter indicating vividness of the image. By adjusting the chroma, the vividness of the image can be adjusted.

The monitor 8 as the displaying device is a display device on which the image, the respective image quality parameters of which are adjusted in the image quality adjusting section 7 after being outputted from the image inputting terminal 5 or the memory 4, is displayed. The monitor 8 includes a CRT (Cathode Ray Tube), liquid crystal or plasma display.

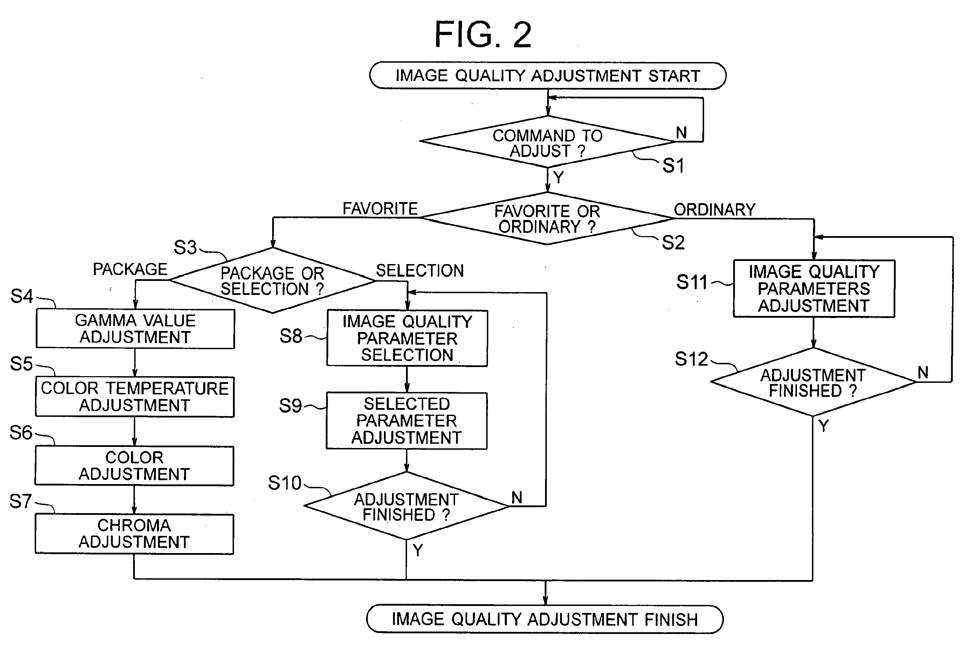

In the following, as for the image adjusting apparatus 1 having a construction as shown in Fig. 1, an action when an image displayed on the monitor 8 is adjusted to an image having a desired image quality for a user by operating the operating section 2 will be explained with reference to a flow chart shown in Fig. 2. The flow chart shown in Fig. 2 is realized when the CPU 3 carries out a control program stored in the ROM of the CPU 3.

First, at step S1, it is judged whether or not a command of the image quality adjustment is performed to the CPU 3 by a user with a button-operation or the like from the operating section 2. If the command is performed (i.e. Y), the CPU 3 proceeds to step S2, on the other hand, if the command is not performed (i.e. N), the above judgment is carried out again.

At step S2, from the operating section 2, the user selects either a favorite adjusting mode or a ordinary adjusting mode. The favorite adjusting mode is a mode in which a method for adjusting according to the present invention is applied. When the favorite adjusting mode is selected, the CPU 3 proceeds to step S3. The ordinary adjusting mode corresponds to a conventional method for adjusting. When the ordinary adjusting mode is selected, the CPU 3 proceeds to step S 11.

At step S3, either a package adjusting mode or a selection adjusting mode is selected. The package adjusting mode is a mode in which all of the gamma value, color temperature, color and chroma are adjusted. When the package adjusting mode is selected, the CPU 3 proceeds to step S4. The selection adjusting mode is a mode in which an item selected from the gamma value, color temperature, color and chroma is adjusted. When the selection adjusting mode is selected, the CPU 3 proceeds to step S8.

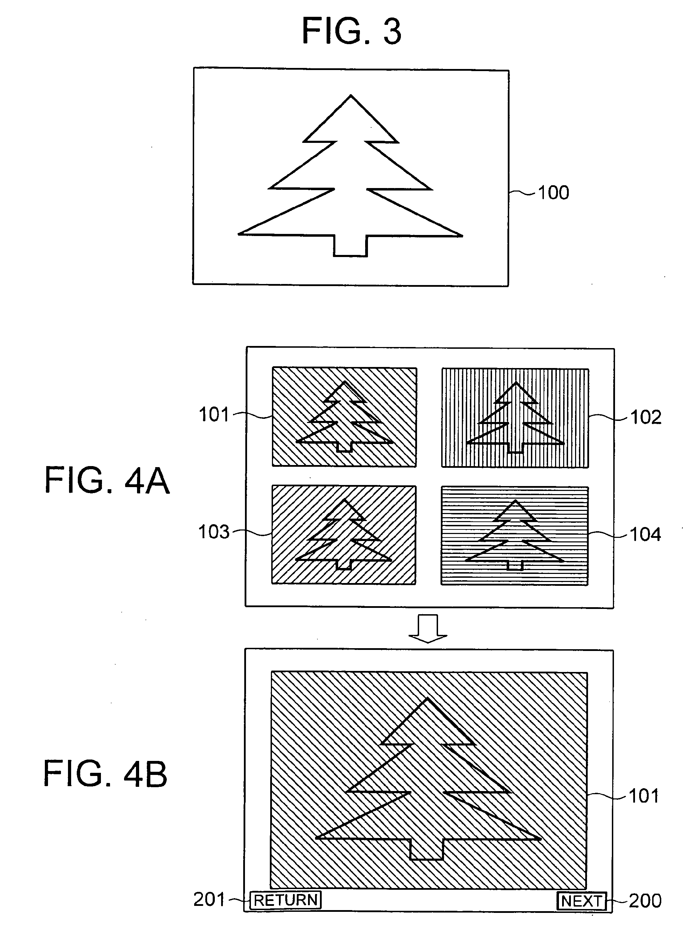

At step S4, the gamma value is adjusted and thereafter, the CPU 3 proceeds to step S5. A process for adjusting the gamma value is as follows: First, for example, an adjustment image 100 shown in Fig. 3 that is an image for adjusting the gamma value is read out from the memory 4, and the selector 6 is switched so as to select an input from the memory 4 and input it to the image quality adjusting section 7. The CPU 3 gives four predetermined adjusting values to the gamma value adjustment 71 of the image quality adjusting section 7 and displays four adjustment display images 101, 102, 103 and 104 having different gamma values from each other with regard to the same adjustment image on the monitor 8 as shown in Fig. 4A. Figure 4A is a schematic illustration of four adjustment display images having different gamma values from each other with regard to the adjustment image 100 shown in Fig. 3. The user selects a favorite image from the four displayed images from the operating section 2. For example, if the adjustment display image 101 is favorite one for the user in Fig. 4A, when the user selects the adjustment display image 101 (i.e. the adjustment display image 101 being surrounded by a thick frame) with a cursor key from the operating section 2 and decides it with a decision key, the adjustment display image 101 is taken in so that only the adjustment display image 101 is displayed as shown in Fig. 4B. Then, when the user selects "next" 200 shown at right bottom in Fig. 4B and presses a relevant decision key of the operating section 2, the CPU 3 proceeds to the next adjustment item, that is, to step S5. When the user want to make a fresh selection, the user selects "return" 201 shown at left bottom in Fig. 4B so as to return to a state of Fig. 4A. That is, with regard to the adjustment image stored in the memory 4, a plurality of the adjustment display images having different gamma values from each other are formed and displayed them on the monitor 8, then a value of the image quality parameter of one adjustment display image selected from a plurality of the displayed adjustment display images is set to be an adjusted value of the gamma value.

Here, upon the adjustment of the gamma value, a plurality of images each suitable for adjusting the gamma value may be prepared so that an average value of the respective gamma values is set to be a final gamma value, for example, two types of the images consisting of an image having mainly bright colors and an image having mainly dark colors are prepared so that an average value of the respective selected gamma values is set to be a final adjusted value of the gamma value.

At step S5, the color temperature is adjusted and thereafter, the CPU 3 proceeds to step S6. Four adjustment display images having different predetermined adjusting values of the color temperature from each other with regard to the same adjustment image are displayed like Fig. 4A, and the user selects one adjustment display image from the four adjustment display images and decides it. The adjustment of the color temperature is carried out with an image for adjusting the color temperature. Upon the adjustment of the color temperature, the gamma value selected at step S4 is reflected.

At step S6, the color (i.e. hue) of skin color is adjusted and thereafter, the CPU 3 proceeds to step S7. Four adjustment display images having different predetermined adjusting values of the color from each other with regard to the same adjustment image are displayed like Fig. 4A, and the user selects one adjustment display image from the four adjustment display images and decides it. The adjustment of the color of skin color is carried out with an image for adjusting the color of skin color. Preferably, the image for adjusting the color of skin color is, for example, an image in which skin color is contained by 30 - 50 percent in the whole image and other colors besides the skin color are contained uniformly. Upon the adjustment of the color, the gamma value selected at step S4 and the color temperature value selected at step S5 are reflected.

At step S7, the chroma is adjusted and then, the adjustment is finished, and the selector 6 is switched so that the adjusted values of the image quality parameters are reflected in an image that is to be inputted from the image inputting terminal 5. Four adjustment display images having different predetermined adjusting values of the chroma from each other with regard to the same adjustment image are displayed like Fig. 4A, and the user selects one adjustment display image from the four adjustment display images and decides it. The chroma is adjusted with regard to four colors, that is, skin color, cyanogen, blue and green. That is, at step S7, exclusive adjustment images are prepared to the respective colors, and the selection and decision with Figs. 4A and 4B are carried out for each color. Preferably, the image for adjusting the chroma is, for example, an image in which the color to be adjusted is contained by 30 - 50 percent in the whole image and other colors besides the color to be adjusted are contained uniformly. Upon the adjustment of the chroma, the gamma value selected at step S4, the color temperature value selected at step S5 and the color value selected at step S6 are reflected.

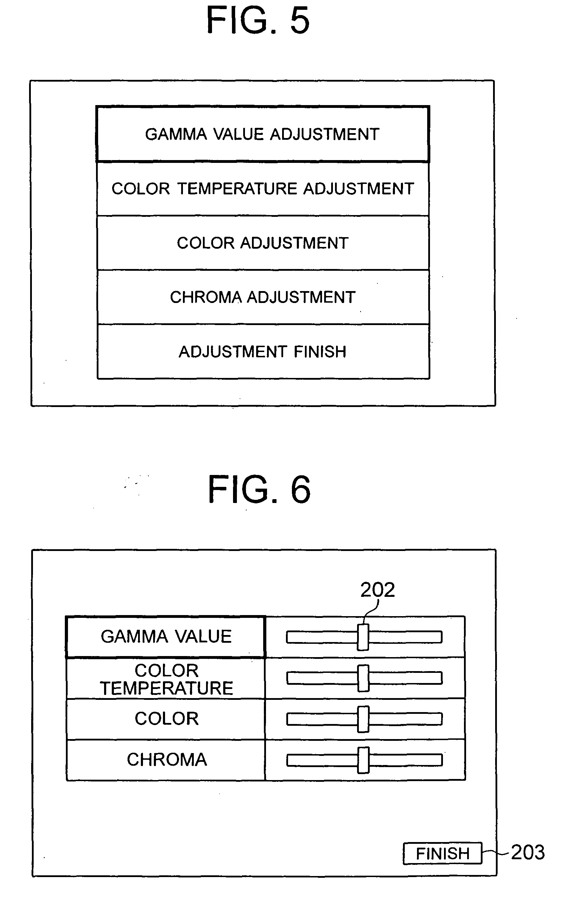

At step S8, a parameter to be adjusted is selected after the selection adjusting mode is selected at step S3 and thereafter, the CPU 3 proceeds to step S9. At step S8, for example, a menu shown in Fig. 5 is displayed, and the user selects a parameter to be adjusted with a cursor key from the operating section 2 (i.e. a state being surrounded by a thick frame) and decides it with a decision key.

At step S9, the parameter selected at step S8 is adjusted and thereafter, the CPU 3 proceeds to step S10. Methods of adjusting are the same as those at steps S4 - S7.

At step S10, it is judged whether or not "adjustment being finished" is selected. If the "adjustment being finished" is selected (i.e. Y), the adjustment is finished, and the selector 6 is switched so that the adjusted values of the parameters are made be reflected in an image that is to be inputted from the image inputting terminal 5. If the "adjustment being finished" is not selected (i.e. N), the CPU 3 returns to step S8.

At step S11, the parameters are adjusted and thereafter, the CPU 3 proceeds to step S12. At step S12, since the ordinary adjustment has been selected at step S2, a picture shown in Fig. 6 is displayed. For example, when the gamma value is selected with a cursor key from the operating section 2, a slide bar 202 is moved left or right so as to adjust the gamma value. The other parameters are adjusted likewise.

At step S12, it is judged whether or not "finish" 203 is selected. If the "finish" 203 is selected (i.e. Y), the adjustment is finished, and the selector 6 is switched so that the adjusted values of the parameters are made be reflected in an image that is to be inputted from the image inputting terminal 5. If the "finish" 203 is not selected (i.e. N), the CPU 3 returns to step S11.

According to the first preferred embodiment, in the image adjusting apparatus 1 that adjusts the image quality of an image, when the favorite adjusting mode is selected, the adjustment images corresponding to the image quality parameters, that is, the gamma value, color temperature, color and chroma are in advance stored in the memory 4, and upon the adjustment, for example, four adjustment display images having different predetermined adjusting values of the gamma value from each other with regard to the image that is for adjusting the gamma value are displayed on the monitor 8, and the user selects one favorite adjustment display image from the four adjustment display images. By repeating such a step with regard to each parameter, finally, the respective image quality parameters are adjusted so as to produce an image having a favorite image quality for the user. That is, even if a user is not conscious of a characteristic of the image quality parameters such as a gamma value, color temperature, color and chroma, an image can be easily adjusted to a favorite image for the user.

Further, by providing the selection adjusting mode in which an image can be adjusted, only a limited image quality parameter can be adjusted. For example, it is possible to readjust a limited image quality parameter after an image is once adjusted in the package adjusting mode.

### [EXAMPLE 2]

In the following, an image adjusting apparatus 1 according to the second preferred embodiment of the present invention will be explained.

The second preferred embodiment is different from the first preferred embodiment in a point that the memory 4 does not store the adjustment images 100 but stores the adjustment display images formed for every image quality parameter in advance. That is, the memory 4 as the adjustment display image inputting device stores the adjustment display images in a form as shown in Fig. 4A and inputs them so as to display them on the monitor 8 as the displaying device by way of the selector 6 and the image quality adjusting section 7. At that time, the image quality adjusting section 7 outputs the inputted images as they are without doing anything until each image quality parameter is determined. Whenever the image quality parameters are determined in steps S4 - S7 and S9 shown in Fig. 2, the parameters are reflected in the adjustment display image to be inputted.

According to the second preferred embodiment, the memory 4 stores the adjustment display images for every image quality parameter in advance and upon the adjustment of the image the adjustment display image inputted from the memory 4 is displayed on the monitor 8 so as to adjust the image, therefore a structure of a relevant circuit becomes simple since there is not need to form the adjustment display images.

Moreover, similarly to the first preferred embodiment, when the favorite adjusting mode is selected, the adjustment images corresponding to the image quality parameters, that is, the gamma value, color temperature, color and chroma are in advance stored in the memory 4, and upon the adjustment, for example, four adjustment display images having different predetermined adjusting values of the gamma value from each other with regard to the image that is for adjusting the gamma value are displayed on the monitor 8, and the user selects one favorite adjustment display image from the four adjustment display images. By repeating such a step with regard to each parameter, finally, the respective image quality parameters are adjusted so as to produce an image having a favorite image quality for the user. That is, even if a user is not conscious of a characteristic of the image quality parameters such as a gamma value, color temperature, color and chroma, an image can be easily adjusted to a favorite image for the user. Further, by providing the selection adjusting mode in which an image can be adjusted, only a limited image quality parameter can be adjusted. For example, it is possible to readjust a limited image quality parameter after an image is once adjusted in the package adjusting mode.

In the preferred embodiments described above, the adjustment is carried out in the sequence of the gamma value, color temperature, color and chroma. However, instead, other sequences may be used. Further, in the preferred embodiments described above, each adjusted parameter is reflected in an adjustment of a next image quality parameter. However, each adjusted parameter may not be reflected in an adjustment of a next image quality parameter and instead, a parameter except a parameter to be adjusted may be adjusted with a corresponding predetermined default value.

In the preferred embodiments described above, the parameters to be adjusted are the gamma value, color temperature, color and chroma. However, instead, the parameters to be adjusted may be parameters, which vary image quality, such as contrast, brightness, sharpness and intensity of noise-reduction.

In the preferred embodiments described above, the adjustment of color is carried out regarding a skin color. However, instead, the adjustment of color may be carried out regarding another color or regarding a plurality of colors. Likewise, the chroma may be adjusted regarding colors other than skin color, cyanogen, blue and green. The number of colors to be adjusted may be increased or decreased. Further, with regard to the color temperature, a plurality of adjustment images that are for adjusting the color temperature may be prepared to carry out the adjustment.

In the preferred embodiments described above, with regard to one image quality parameter, a user selects one adjustment display image from four adjustment display images. However, instead, a use may select one adjustment display image from any plural adjustment display images.

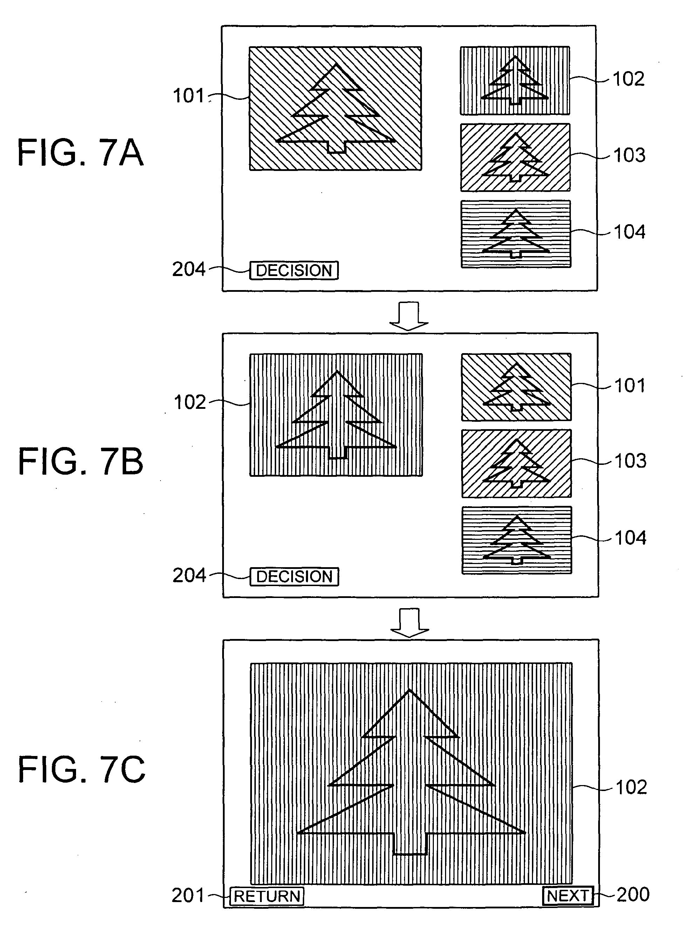

A displaying form when each image quality parameter is adjusted is not limited to the form shown in Fig. 4A, in which the selected adjustment display image is surrounded by a thick frame, and may be a form shown in Figs. 7A and 7B. In Figs. 7A and 7B, the selected adjustment display image is displayed larger than the other adjustment display images (that is, non-selected adjustment display images). In Fig. 7A, the adjustment display image 101 is selected. On the other hand, in Fig. 7B, the adjustment display image 102 is selected and in this case, when the "decision" 204 is selected and a decision key of the operating section 2 is pressed, only the selected adjustment display image 102 is displayed as shown in Fig. 7C.

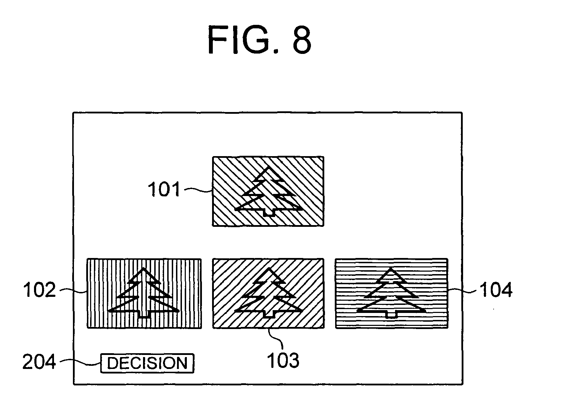

Further, as shown in Fig. 8, the selected adjustment display image may be displayed at the center of a screen. Alternatively, the selected adjustment display image may be displayed at a specific position such as at a left end. That is, upon simultaneously displaying a plurality of the adjustment display images having different image quality parameters from each other, any displaying method may be used to clearly indicate one selected adjustment display image from a plurality of the adjustment display images, such as by surrounding the selected adjustment display image with a thick frame, by displaying it largely or by displaying it at a specific position.

In the preferred embodiments described above, the adjustment image and the adjustment display image, which are stored in the memory 4, are static images. However, instead, the adjustment image and the adjustment display image may be dynamic images. The adjustment image inputting device or the adjustment display image inputting device is not limited to a nonvolatile memory element but may be a hard disk, an optical disk or a device from which the images are inputted through an external inputting terminal of such a device.

According to the preferred embodiments described above, the following image adjusting apparatus and image adjusting method can be obtained.

[Additional Remark 1] An image adjusting apparatus 1 including:
an image quality adjusting section 7 for adjusting a gamma value with regard to an inputted image;
a monitor 8 for displaying four adjustment display images 101, 102, 103 and 104 having different gamma values from each other with regard to an adjustment image 100 that is an image for adjusting the gamma value;
an operating section 2 for taking in one adjustment display image 101 selected from the four adjustment display images 101, 102, 103 and 104 displayed on the monitor 8; and
a CPU 3 for causing the image quality adjusting section 7 to adjust the inputted image on the basis of a gamma value of said one adjustment display image 101 taken in by the operating section 2.

According to the image adjusting apparatus 1 described above, a user can select one image having a favorite image quality from the four adjustment display images 101, 102, 103 and 104 having different gamma values from each other with regard to an adjustment image 100, therefore the user can intuitively adjust the image quality without directly handling the gamma value and without understanding the meaning and characteristic of the gamma value.

[Additional Remark 2] An image adjusting method for adjusting a gamma value with regard to an inputted image, including the steps of:
displaying four adjustment display images 101, 102, 103 and 104 having different gamma values from each other with regard to an adjustment image 100 that is an image for adjusting the gamma value;
taking in one adjustment display image 101 selected from the four displayed adjustment display images 101, 102, 103 and 104; and
adjusting the inputted image on the basis of a gamma value of said one adjustment display image 101.

According to the image adjusting method described above, a user can select one image having a favorite image quality from the four adjustment display images 101, 102, 103 and 104 having different gamma values from each other with regard to an adjustment image 100, therefore the user can intuitively adjust the image quality without directly handling the gamma value and without understanding the meaning and characteristic of the gamma value.

The aforementioned preferred embodiments are described to aid in understanding the present invention and variations may be made by one skilled in the art without departing from the spirit and scope of the present invention.

Incidentally, the contents of Japanese Patent Application No. 2006-054361 are hereby incorporated by reference.

## Claims

1. An image adjusting apparatus comprising:
an adjusting device for adjusting at least one kind of image quality parameter with regard to an inputted image;
a displaying device for displaying a plurality of adjustment display images having different image quality parameter values from each other with regard to an adjustment image that is an image for adjusting the image quality parameter;
a taking-in device for taking in one adjustment display image selected from a plurality of the adjustment display images displayed by the displaying device; and
a controlling device for causing the adjusting device to adjust the inputted image on the basis of an image quality parameter value of said one adjustment display image taken in by the taking-in device.

2. The image adjusting apparatus according to claim 1 further comprising:
an adjustment image inputting device for inputting the adjustment image; and
an adjustment display image forming device for forming a plurality of the adjustment display images from the adjustment image inputted from the adjustment image inputting device,
wherein the adjusting device displays a plurality of the adjustment display images formed by the adjustment display image forming device.

3. The image adjusting apparatus according to claim 1 further comprising an adjustment display image inputting device for inputting the adjustment display images, wherein the adjusting device displays the adjustment display images inputted from the adjustment display image inputting device.

4. The image adjusting apparatus according to claim 1 further comprising a storing device for storing the adjustment image in advance for every image quality parameter if there are a plurality of the image quality parameters to be adjusted.

5. The image adjusting apparatus according to claim 2 further comprising a storing device for storing the adjustment image in advance for every image quality parameter if there are a plurality of the image quality parameters to be adjusted.

6. The image adjusting apparatus according to claim 3 further comprising a storing device for storing the adjustment image in advance for every image quality parameter if there are a plurality of the image quality parameters to be adjusted.

7. The image adjusting apparatus as claimed in any one of claims 1 - 6, wherein the storing device stores a plurality of the adjustment images with regard to one image quality parameter, wherein said one image quality parameter is adjusted with regard to a plurality of the adjustment images.

8. An image adjusting method for adjusting at least one kind of image quality parameter with regard to an inputted image, comprising the steps of:
displaying a plurality of adjustment display images having different image quality parameter values from each other with regard to an adjustment image that is an image for adjusting the image quality parameter;
taking in one adjustment display image selected from a plurality of the displayed adjustment display images; and
adjusting the inputted image on the basis of an image quality parameter value of said one adjustment display image.
